(19) Europäisches Patentamt

European Patent Office

Office européen des brevets

(11) **EP 0 913 365 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.⁷: **C03C 3/085**, C03C 3/093, H01K 1/28

(21) Anmeldenummer: **98118758.6**

(22) Anmeldetag: **05.10.1998**

(54) **Thermisch hochbelastbares Glas für Lampenkolben und dessen Verwendung**

Thermally resistant glass for lamp envelopes and its use

Verre à haute résistance thermique pour envelopper des lampes et son utilisation

(84) Benannte Vertragsstaaten:
**BE DE ES FR GB IT NL**

(30) Priorität: **27.10.1997 DE 19747355**

(43) Veröffentlichungstag der Anmeldung:
**06.05.1999 Patentblatt 1999/18**

(73) Patentinhaber:
• **Schott Glas**
  **55122 Mainz (DE)**
  Benannte Vertragsstaaten:
  **BE DE ES FR IT NL**
• **CARL-ZEISS-STIFTUNG**
  **trading as SCHOTT GLAS**
  **55122 Mainz (DE)**
  Benannte Vertragsstaaten:
  **GB**

(72) Erfinder:
• **Naumann, Karin, Dr.**
  **55270 Ober-Olm (DE)**
• **Becker, Otmar, Dr.**
  **63225 Langen (DE)**
• **Ott, Franz, Dr.**
  **95666 Mitterteich (DE)**

(56) Entgegenhaltungen:
EP-A- 0 261 819     EP-A- 0 638 526
US-A- 4 298 388     US-A- 5 489 558

## Beschreibung

Die Erfindung betrifft ein Erdalkalialuminosilicatglas für Molybdän-Komponenten aufweisende Lampenkolben mit Kolbentemperaturen von mehr als 650 °C sowie dessen Verwendung.

An die Gläser für Hochtemperaturlampen - darunter versteht man in der Regel Lampen mit Kolbentemperaturen ab 550 °C - werden hohe Anforderungen gestellt.

Bei den in Frage kommenden Gläsern handelt es sich um Erdalkalialumino(boro)silicatgläser. Die Gläser müssen im wesentlichen alkalioxid-frei sein, da Alkaliionen den regenerativen Halogenkreislauf der Lampe stören. Im Betrieb der Lampe bildet sich nämlich aus dem Wolframdampf von der Wendel und der Halogen-Inertgas-Mischung ein Gleichgewicht zwischen Bildung und Zerfall von Wolfram-Halogeniden. Dabei findet die Zerfallsreaktion bei höheren Temperaturen als die Bildungsreaktion statt, so daß sich das Wolfram wieder auf der Wendel abscheidet. Wird dieser Kreislauf durch verunreinigende Komponenten wie beispielsweise Alkaliionen gestört, scheidet sich das Wolfram statt auf der Wendel auf der Glaskolbeninnenseite als schwarz glänzender störender Belag ab.

In der Patentliteratur existieren bereits zahlreiche Schriften, die Gläser für Glühlampen betreffen. Jedoch sind diese Gläser mit den verschiedensten Nachteilen behaftet.

US 3,978,362 beschreibt Glühlampen mit Lampenkolben aus hoch CaO-haltigen (14 - 21 Gew.-%) Glas. DE 37 36 887 C2 beschreibt Glühlampen aus hoch BaO-haltigen (10 - 23 Gew.-%) Glaskolben.

in weiteren Schriften werden Gläser mit bestimmten Verhältnissen zwischen CaO und BaO beansprucht:

DE-AS-27 33 169 betrifft Gläser für Dichtungen mit Molybdän, bei denen das Gewichtsverhältnis CaO : BaO zwischen 0,6 und 1 beträgt. Diese Gläser sind $B_2O_3$ -frei.

DE 29 30 249 C2 betrifft die Verwendung von bestimmten Glaszusammensetzungen als Kolbenmaterial, in denen das Gewichtsverhältnis BaO : CaO zwischen 2,3 und 3,5 beträgt. (CaO : BaO zwischen 0,28 und 0,43). Diese Gläser sollen eine verbesserte Beständigkeit gegen das sogenannte Nachschäumen ("reboil") aufweisen. Beim Nachschäumen handelt es sich um die Tendenz des Glases, beim Wiederbearbeiten mit einer Flamme oder beim Wiedererhitzen viele kleine Blasen von eingeschlossenen Gasen zu bilden. Dadurch wird die Lichtdurchlässigkeit verschlechtert und werden die wiedererhitzten Bereiche geschwächt.

Nachteilig an den Gläsern mit sehr hohen BaO-Anteilen sind hohe Schmelz- und Verarbeitungstemperaturen, die zu einer stärkeren Beanspruchung des Wannenmaterials führen und mit hohen Energiekosten verbunden sind, während die Gläser mit hohen CaO-Anteilen, verglichen mit den hoch BaO-haltigen, stärker zur Kristallisation neigen und eine höhere Dehnung besitzen.

US 4,060,423 beschreibt $B_2O_3$ -freie Gläser für Mo-Einschmelzungen, bei denen das Gewichtsverhältnis $Al_2O_3$ / (BaO + CaO) im Bereich von 0,6 bis 1 liegt.

Auch US 4,298,388 beschreibt $B_2O_3$-freie Gläser für Glas-Mo-Verschmelzungen. Diese Gläser sind auch MgO-frei und weisen hohe CaO-Anteile (bis zu 19,2 Gew.-%) auf. BaO ist nur fakultative Komponente.

Die $B_2O_3$ -freien Gläser besitzen zwar, zumindest wenn sie wenig oder kein MgO enthalten, eine ausreichende thermische Stabilität, sichtbar beispielsweise an hohen Erweichungstemperaturen und hohen unteren Entspannungstemperaturen, und lassen prinzipiell auch Kolbentemperaturen bis 700 °C zu, sie haben jedoch den Nachteil, daß sie bei hohen Temperaturen geschmolzen werden müssen. Die damit verbundene starke Korrosion der Wannensteine und des Gewölbematerials führt partiell zu schlechten Glasqualitäten und zu einer Zunahme des Verunreinigungsgrades, was ein solches Glas für die Verwendung als Kolbenmaterial nicht gut geeignet sein läßt, da zunehmende Verunreinigungen zu verstärkter Schwarzfärbung der Lampe führen können.

Es sind auch Gläser für Glühlampenkolben bekannt, die große Mengen an $B_2O_3$ benötigen:

So enthalten die Gläser für Einschmelzungen mit Molybdän aus US 3,310,413 4 bis 9 Gew.-% $B_2O_3$. Auch die Dichtungs- bzw. Kolbengläser aus DE 33 05 587 A1 benötigen 3 bis 7 Gew.-% $B_2O_3$ und außerdem hohe Anteile an BaO (11 - 16 Gew.-%). Solche hohen Gehalte an $B_2O_3$, insbesondere in Kombination mit MgO, senken die Viskositätswerte, so daß diese Gläser für Halogenlampen mit Kolbentemperaturen von mehr als 650 °C, beispielsweise von ca. 700 °C, nicht geeignet sind. Die geringe thermische Belastbarkeit der Gläser führt zu Ausbeulungen des Lampenkolbens, die so weit fortschreiten können, daß der Kolben explodiert. Ein Beispiel für ein solches Glas ist das kommerziell erhältliche Glas V1 der Zusammensetzung (in Gew.-%) 56,8 $SiO_2$; 16,4 $Al_2O_3$; 4,7 $B_2O_3$; 5,8 MgO; 7,8 CaO; 8,0 BaO mit einer oberen Kühltemperatur OKP von 721 °C.

Das US-Patent US 3,496,401 beschreibt Glühlampen aus einem Erdalkalialuminosilicatglas mit einem Höchstgehalt von 0,1 Gew.-% an Alkalioxiden, insbesondere aus Gläsern aus $SiO_2$, $Al_2O_3$, 10-25 Gew.-% Erdalkalioxiden, wobei ihre Anteile nicht weiter spezifiziert sind, und 0 - 10 Gew.-% $B_2O_3$. Die Ausführungsbeispiele sind entweder $B_2O_3$ -frei oder enthalten wenigstens 4 Gew.-% $B_2O_3$. Der maximal zulässige Alkalioxidgehalt ist für die hohen Kolbentemperaturen von ca. 700 °C zu hoch und wird bei Betrieb der Lampe zur Schwärzung der Kolbeninnenfläche führen.

Bei hohen Leistungen der Lampe steigt die Kolbentemperatur an. Da mit zunehmender Temperatur die Ionenbeweglichkeit im Glas zunimmt und Diffusionsprozesse leichter ablaufen, reichen bereits geringere Mengen an Alkaliionen aus, um den Halogenkreislauf zu stören.

Wasser bzw. die Wasserstoffionen wirken sich, analog zu den Alkaliionen, ebenfalls störend auf den Halogenkreislauf aus.

Daher wird auch in US 4,163,171 eine Glühlampe beschrieben, deren Glas nicht nur "im wesentlichen alkalifrei" ist, sondern auch nur weniger als 0,03 Gew.-% Wasser enthalten darf.

US 5,489,558 beschreibt Gläser, die insbesondere für die Verwendung in Flachglasdisplays geeignet sind. Diese Gläser enthalten entweder viel $Al_2O_3$ ($\geq$ 18 Gew.-%) bei relativ geringen $SiO_2$-Gehalten ($\leq$ 55 Gew.-%) oder wenig $Al_2O_3$ ($\leq$ 13 Gew.-%) bei höheren $SiO_2$-Gehalten ($\geq$ 55 Gew.-%). Die Gläser sind speziell an a- und poly-Silicium und weniger an Mo angepaßte Gläser. Ihr Viskositätsverhalten ist besonders geeignet für die Ziehtechnologie von Flachglasscheiben und weniger für die von Rohren für den Lampenbau. Analoges gilt für die Gläser aus EP 0 672 629 A2 und US 5,508,237.

Für die Verwendung als Lampenkolbenglas für Lampenkolben, die Molybdän-Komponenten als Elektroden- oder Zuleitungsmaterial enthalten, muß die thermische Dehnung des Glases an Molybdän angepaßt sein, damit eine dichte spannungsfreie Verschmelzung zwischen dem Metall und dem Glas erzielt wird.

Das bedeutet, daß das Glas bei dessen Erstarrungstemperatur (Set-Point) im Vergleich zum Mo eine höhere Dehnung besitzen muß, d. h. die Dehnungsdifferenz zwischen Mo und dem Glas muß positiv sein, um im Glas eine für die Abdichtung von Mo-Zuleitungen günstige radiale Druckspannung zu erzielen.

Eine weitere Anforderung an ein für die Verwendung als Kolbenglas für Lampenkolben geeignetes Glas ist seine Eignung für den Rohrzug. Dafür muß es ausreichend kristallisationsstabil sein.

Es ist nun Aufgabe der Erfindung, ein Glas zu finden, das thermisch hochbelastbar ist und die genannten Anforderungen an ein Material für Lampenkolben mit Kolbentemperaturen von mehr als 650 °C erfüllt.

Diese Aufgabe wird durch das im Hauptanspruch beschriebene Glas gelöst. Dieses Erdalkalialuminosilicatglas besitzt ein sehr ausgewogenes Verhältnis von Bestandteilen, die nur in relativ engen Grenzen variieren, um alle gewünschten Eigenschaften zu vereinen.

Das erfindungsgemäße Glas enthält > 58 bis 62 Gew.-% $SiO_2$. Bei niedrigeren Gehalten würde die thermische Ausdehnung zu groß, bei höheren Gehalten würde sie zu gering. In beiden Fällen wäre das Glas nicht an Mo angepaßt, was undichte Halogenlampen zur Folge hätte. Bevorzugt ist der Bereich zwischen 59 und 61 Gew-% $SiO_2$.

Das Glas enthält 15 bis 17,5 Gew.-% $Al_2O_3$. Auch Abweichungen von diesem Bereich würden zu Dehnungsfehlanpassungen führen. Niedrigere Gehalte würden außerdem die Transformationstemperatur $T_g$ herabsetzen, was die thermische Belastbarkeit verringern würde. Bevorzugt sind Gehalte zwischen 15,3 und 17,2 Gew.-%.

Weiter enthält das Glas geringe Mengen an $B_2O_3$, und zwar 0,2 bis 0,7 Gew.-%. Bevorzugt sind 0,3 bis 0,5 Gew.-%. In diesen geringen Mengen wirkt das Boroxid bereits vorteilhaft schmelzerleichternd, ohne dabei die benötigte hohe Transformationstemperatur $T_g$ zu sehr herabzusetzen.

Außerdem erleichtert es die Löslichkeit eines weiteren Bestandteiles des Glases, nämlich des $ZrO_2$, das im Glas mit 0,05 bis 1,0 Gew.-% vorhanden ist. Gerade in alkalifreien Aluminosilicatgläsern wäre nämlich sonst die Lös-lichkeit von $ZrO_2$ sehr begrenzt, und würden $ZrO_2$-Steinchen und -Schlieren zu einer schlechten Glasqualität führen. Der $ZrO_2$-Gehalt im Glas trägt dazu bei, die gewünschte hohe Transformationstemperatur $T_g$ von > 775 °C zu erreichen.

Das Glas enthält Erdalkalioxide in bestimmten Mengen und in einem bestimmten Verhältnis zueinander: BaO liegt mit 6 bis 10 Gew.-% (vorzugsweise > 6,5 - 9,5 Gew.-%) und CaO mit 5,5 bis 14 Gew.-% (vorzugsweise 5,9 bis 13,5 Gew.-%) im Glas vor. Weiter kann das Glas bis zu 8 Gew.-% SrO enthalten. SrO wirkt ähnlich wie BaO viskositätserhöhend.

Die Summe der genannten Erdalkalioxide RO soll dabei 21 Gew.-% nicht unterund 24 Gew.-% nicht überschreiten, da sonst sowohl die thermische Dehnung als auch die Viskosität von den gewünschten Werten abweichen würden.

Das Gewichtsverhältnis zwischen der Summe aus CaO und SrO auf der einen Seite und BaO auf der anderen Seite ((CaO+SrO)/BaO) soll zwischen 1,45 und 1,75 betragen. Das Glas kann zusätzlich bis zu < 1 Gew.-% MgO enthalten. Zusätze von MgO speziell zu einem CaO und BaO enthaltenden Aluminosilicatglas können zu einer Verfestigung des Glasnetzwerkes beitragen, denn MgO als sogenanntes "Zwischenoxid" mit $Mg^{2+}$ als Kation höherer Feldstärke als $Ca^{2+}$ und $Ba^{2+}$ kann ähnlich wie $Al_2O_3$ und $SiO_2$ Netzwerkbildnerfunktion übernehmen. Auch mit MgO soll die Summe aus RO zwischen 21 und 24 Gew.-% betragen. Beim Vorliegen von MgO im Glas soll das Gewichtsverhältnis (CaO + SrO + MgO)/BaO zwischen 1,45 und 1,75 betragen. Vorzugsweise beträgt das Gewichtsverhältnis (CaO + SrO)/BaO bzw. bei MgO-haltigen Gläsern das Gewichtsverhältnis (CaO + SrO + MgO)/BaO zwischen 1,65 und 1,75.

In den thermisch hochbelasteten Lampen ist die Halogenfüllung im allgemeinen ein bromidhaltiges Gas, und Verunreinigungen aus dem Glas und aus der Wendel wie beispielsweise Alkaliionen reagieren mit dem Bromid, hier zu Alkalibromiden, die sich als weißer Niederschlag auf der Glasinnenseite des Kolbens abscheiden. Dabei verringert sich die Halogenkonzentration in der Lampe, und der regenerative Halogenkreislauf wird gestört, bzw. bricht zusammen.

Dem erfindungsgemäßen Glas können nun bis zu 2 Gew.-% Br⁻ zugegeben werden, was aufgrund der Flüchtigkeit der eingesetzten Verbindungen (z.B. $BaBr_2$) etwa bis zu 0,6 Gew.-% im fertigen Glas entspricht. Dieser Bromid-Zusatz soll verhindern, daß Bromid aus dem Kreislauf weggefangen wird, und so auch die Schwarzfärbung durch Wolframabscheidungen verhindern. Weiter hat das Bromid bei der Herstellung Läuterwirkung. Außerdem kann durch Bromidzusätze die UV-Absorptionskante des Glases zu kürzeren Wellenlängen verschoben werden, was einen Einsatz des Glases als partiell UV-durchlässiges Glas ermöglicht. Solche Gläser sind für die Verwendung in Bräunungslampen interessant. So enthält das erfindungsgemäße Glas in einer bevorzugten Ausführungsform wenigstens 0,05 Gew.-% Bromid. Höhere Anteile als die genannte Obergrenze würden keine Steigerung der positiven Effekte mehr bewirken.

$CeO_2$ dagegen bewirkt im Glas eine Verschiebung der UV-Absorptionskante zu längeren Wellenlängen. Außerdem wirkt es als Läutermittel. Es hat sich gezeigt, daß $CeO_2$ die störenden Halogenidablagerungen auf der Innenseite des Kolbens verringert, und so wird auch die Schwärzung beim Lampenbetrieb verringert sein.

Das erfindungsgemäße Glas kann dazu auch bis zu 0,3 Gew.-% $CeO_2$ enthalten. Bei höheren Gehalten käme es zu einer störenden Gelbfärbung des Glases. In einer bevorzugten Ausführungsform sind wenigstens 0,04 Gew.-% im Glas vorhanden.

Mit gezielt ausgewählten Gehalten von gleichzeitig $CeO_2$ und Bromid im Glas kann die UV-Absorptionskante auch wieder zu der des undotierten Glases verschoben werden.

Weiter kann das Glas noch bis zu 0,5 Gew.-% $TiO_2$ enthalten. Durch diese Komponente wird die UV-Kante in geringerem Maße als durch $CeO_2$ in den längerwelligen Spektralbereich verschoben. Bei höheren Gehalten würde durch Reaktion von $TiO_2$ mit Eisenverunreinigungen zu einer gefärbten Eisentitanatverbindung das Glas bräunlich erscheinen. Damit ist es als Lampenglas nicht mehr geeignet.

Wie schon oben erwähnt, sind auch der Gehalt an Alkalioxiden und an Wasser von großer Bedeutung. Die Anforderungen an einen möglichst niedrigen Gehalt sind um so höher, je höher die Betriebstemperaturen der Lampe sind. Bei den erfindungsgemäßen Gläsern, die für die Verwendung als Kolbenmaterial für Lampenkolben mit Kolbentemperaturen von ca. 700 °C geeignet sind, sollen der Alkalioxidgehalt auf weniger als 0,03 Gew.-% und der Wassergehalt auf weniger als 0,02 Gew.-% beschränkt bleiben. Dadurch wird, auch aufgrund der gesamten ausgewogenen Zusammensetzung, insbesondere der Erdalkaliverhältnisse, auch bei den genannten hohen Temperaturen und nach längerem Betrieb der Lampe die Schwarzfärbung verringert.

Der Alkaligehalt kann niedrig gehalten werden durch die Verwendung alkaliarmer Rohstoffe sowie durch saubere Bedingungen bei der Gemengebereitung und im Einlegeteil der Schmelzwanne.

Auch der Wassergehalt kann durch die Auswahl der Rohstoffe und die Schmelzbedingungen ausreichend niedrig gehalten werden.

**Beispiele:**

Zur Herstellung der Beispielgläser wurden von den Rohstoffen für die oxidischen Komponenten, wie z. B. Quarzsand, Aluminiumoxid, Magnesium-, Calcium- und Bariumcarbonat, sowie Zirconsand jeweils alkaliarme Varianten eingesetzt. Weiterhin wurden ggf. Ceroxid und Bariumbromid zugegeben. Das gut homogenisierte Gemenge wurde im Labor in einem Pt/Rh-Tiegel bei 1600 - 1650 °C geschmolzen, geläutert und homogenisiert. Anschließend wurde das Glas in einer Laborrohrziehanlage senkrecht abgezogen. Die Gläser waren frei von störenden Kriställchen.

Die Tabelle 1 zeigt fünf Beispiele erfindungsgemäßer Gläser (A) sowie ein Vergleichsbeispiel (V1) mit ihren Zusammensetzungen (in Gew.-% auf Oxidbasis) und ihren wesentlichen Eigenschaften:

Neben der Transformationstemperatur ($T_g$) und der Temperatur bei einer Viskosität von $10^4$ dPas ($V_A$) ist auch die Reboiltemperatur angegeben. Hierbei handelt es sich um die Temperatur, bei der eine bei Raumtemperatur visuell blasenfreie Glasprobe bei Temperaturerhöhung an der Grenzfläche zu einem Metall (Probenhalter, Mo) plötzlich Blasenbildung zeigt. Je höher diese Reboiltemperatur liegt, desto weniger neigt das Glas bei der Verschmelzung mit Mo zur Blasenbildung. Beim Vergleichsbeispiel ist anstelle von $T_g$ der Obere Kühlpunkt (OKP) angegeben.

Weiter sind der thermische Ausdehnungskoeffizient $\alpha_{20/300}$ angegeben sowie für drei Beispiele $\tau_{80}$. Der $\tau_{80}$-Wert gibt die Wellenlänge an, bei der die Transmission bei einer Glasprobendicke von 1 mm 80 % beträgt.

Für das Beispiel A1 wurden die maximale Kristallwachstumsgeschwindigkeit $KG_{max}$ und die Obere Entglasungsgrenze OEG (Liquidustemperatur) bestimmt. Die Ergebnisse $KG_{max}$ = 0,16 µm/min und OEG = 1245 °C (60 K unter $V_A$) dokumentieren die gute Kristallisationsstabilität der erfindungsgemäßen Gläser.

Für einen Lampentest wurden auf übliche Art aus den Glasrohren Wolfram-Halogenlampen mit hoher Leistung hergestellt. Diese wurden einem Dauerbetrieb bei einer Kolbentemperatur von 700 °C unterworfen. Die Dauer bis zum Beginn einer Schwärzung auf der Glaskolbeninnenseite wurde bestimmt. Sie betrug bei A1 140 h, bei A2 75 h. Auch A3 - A5 sind ausreichend gut. Bei V1 kommt es zur Kolbenausbeulung.

Neben dem in der Tabelle 1 aufgeführten Vergleichsbeispiel V1 wurden auch noch Beispielgläser hergestellt, die sich vom Beispiel A1 nur durch einen höheren (zu hohen) Wassergehalt (V2) und durch einen höheren (zu hohen) Alkaligehalt (V3) unterscheiden:

V2 mit 0,028 Gew.-% $H_2O$ zeigt im oben beschriebenen Lampentest schon nach 25 h eine Schwarzfärbung.

V3 mit 0,09 Gew.-% $Na_2O$ und 0,01 Gew.-% $K_2O$ zeigt schon nach weniger als 25 h eine Schwarzfärbung.

Tabelle 1:

| Ausführungsbeispiele (A) und Vergleichsbeispiel (V1): Zusammensetzungen der Gläser (in Gew.-%) und ihre wesentlichen Eigenschaften | | | | | | |
|---|---|---|---|---|---|---|
| | A1 | A2 | A3 | A4 | A5 | V1 |
| $SiO_2$ | 60,7 | 60,7 | 60,7 | 60,7 | 59,4 | 56,8 |
| $Al_2O_3$ | 16,5 | 16,5 | 16,5 | 16,5 | 16,5 | 16,4 |
| $B_2O_3$ | 0,3 | 0,3 | 0,3 | 0,3 | 0,5 | 4,7 |
| MgO | - | - | - | - | - | 5,8 |
| CaO | 13,5 | 13,5 | 13,5 | 13,5 | 8,5 | 7,8 |
| SrO | - | - | - | - | 5,0 | - |
| BaO | 8,0 | 8,0 | 8,0 | 8,0 | 9,1 | 8,0 |
| $ZrO_2$ | 1,0 | 1,0 | 1,0 | 1,0 | 1,0 | - |
| $CeO_2$ | - | - | - | 0,1 | - | - |
| $Br^-$ | - | - | 0,12 | - | - | - |
| $Na_2O$ | 0,02 | 0,02 | 0,017 | 0,022 | 0,02 | 0,028 |
| $K_2O$ | 0,006 | 0,009 | 0,005 | 0,007 | 0,007 | 0,018 |
| $H_2O$ [Gew.-%] | 0,0122 | 0,002 | 0,007 | 0,007 | 0,01 | 0,017 |
| $\alpha_{20/300}$ [$10^{-6}$/K] | 4,72 | 4,82 | 4,68 | 4,59 | 4,72 | 4,52 |
| $T_g$ [°C] | 794 | 790 | 795 | 802 | 790 | 721 (OKP) |
| $V_A$ [°C] | 1305 | n.b. | n.b. | n.b. | 1330 | n.b. |
| Reboiltemp. [°C] | 1500 | 1566 | 1453 | 1515 | 1490 | n.b. |
| $\tau_{80}$ | 350 | n.b. | 340 | 357 | n.b. | n.b. |
| n.b.= nicht bestimmt | | | | | | |

Die erfindungsgemäßen Gläser mit thermischen Ausdehnungskoeffizienten $\alpha_{20/300}$ zwischen 4,3 $*$ $10^{-6}$/K und 4,95 $*$ $10^{-6}$/K und Transformationstemperaturen $T_g$ von mehr als 775 °C zeigen ihre hohe thermische Belastbarkeit und ihre Eignung für die Verwendung als Kolbenmaterial für Lampenkolben mit Kolbentemperaturen von ca. 700 °C auch im Lampentest. ihre Beständigkeit gegen das Nachschäumen wird durch Reboiltemperaturen von wenigsten 1450 °C dokumentiert.

**Patentansprüche**

**1.**   Erdalkalialuminosilicatglas für Molybdän-Komponenten aufweisende Lampenkolben mit Kolbentemperaturen von mehr als 650 °C, **gekennzeichnet durch** folgende Zusammensetzung (in Gew.-% auf Oxidbasis):

| | |
|---|---|
| $SiO_2$ | >58 - 62 |
| $Al_2O_3$ | 15 - 17,5 |
| $B_2O_3$ | 0,2 - 0,7 |
| CaO | 5,5 - 14 |
| SrO | 0 - 8 |
| BaO | 6 - 10 |
| $ZrO_2$ | 0,05 - 1 |
| $CeO_2$ | 0 - 0,3 |
| $TiO_2$ | 0 - 0,5 |

(fortgesetzt)

| | |
|---|---|
| Br⁻ | 0 - 0,6 |
| mit | |
| Σ RO | 21 - 24 |
| $\frac{CaO + SrO}{BaO}$ | 1,45 - 1,75 |

und einem Alkalioxidgehalt von < 0,03 Gew.-%
und einem Wassergehalt von < 0,02 Gew.-%.

2. Glas nach Anspruch 1,
   **gekennzeichnet durch**
   folgende Zusammensetzung (in Gew.-% auf Oxidbasis):

| | |
|---|---|
| $SiO_2$ | 59 - 61 |
| $Al_2O_3$ | 15,3 - 17,2 |
| $B_2O_3$ | 0,3 - 0,5 |
| CaO | 5,9 - 13,5 |
| SrO | 0 - 8 |
| BaO | > 6,5 - 9,5 |
| $ZrO_2$ | 0,05 - 1 |
| $CeO_2$ | 0 - 0,3 |
| $TiO_2$ | 0 - 0,5 |
| Br⁻ | 0 - 0,6 |
| mit | |
| Σ RO | 21 - 24 |
| $\frac{CaO + SrO}{BaO}$ | 1,45 - 1,75 |

und einem Alkalioxidgehalt von < 0,03 Gew.-% und einem Wassergehalt von < 0,02 Gew.-%.

3. Glas nach Anspruch 1 oder 2,
   **dadurch gekennzeichnet,**
   **daß** das Glas zusätzlich bis zu < 1 Gew.-% MgO enthält und daß die Summe von RO 21 - 24 Gew.-% und das Gewichtsverhältnis (MgO + CaO + SrO)/BaO 1,45 - 1,75 beträgt.

4. Glas nach Anspruch 1, 2 oder 3,
   **dadurch gekennzeichnet,**
   **daß** das Gewichtsverhältnis (MgO + CaO + SrO) / BaO 1,65 -1,75 beträgt.

5. Glas nach wenigstens einem der Ansprüche 1 bis 4,
   **dadurch gekennzeichnet,**
   **daß** es wenigstens 0,5 Gew.-% Br⁻ enthält.

6. Glas nach wenigstens einem der Ansprüche 1 bis 5,
   **dadurch gekennzeichnet,**
   **daß** es wenigstens 0,04 Gew.-% $CeO_2$ enthält.

7. Glas nach wenigstens einem der Ansprüche 1 bis 6,
   mit einem thermischen Ausdehnungskoeffizienten $\alpha_{20/300}$ zwischen 4,3 ∗ $10^{-6}$/K und 4,95 ∗ $10^{-6}$/K, einer Transformationstemperatur $T_g$ von mehr als 775 °C und einer Reboiltemperatur von wenigstens 1450 °C.

8. Verwendung eines Glases nach wenigstens einem der Ansprüch 1 bis 7 als Kolbenmaterial für Lampenkolben mit Kolbentemperaturen von mehr als 650 °C.

**Claims**

1. Aluminosilicate glass which contains alkaline earth metals for lamp bulbs which have molybdenum components and bulb temperatures of more than 650°C, **characterized by** the following composition (in % by weight, based on oxide):

| | |
|---|---|
| $SiO_2$ | > 58 - 62 |
| $Al_2O_3$ | 15 - 17.5 |
| $B_2O_3$ | 0.2 - 0.7 |
| CaO | 5.5 - 14 |
| SrO | 0 - 8 |
| BaO | 6 - 10 |
| $ZrO_2$ | 0.05 - 1 |
| $CeO_2$ | 0 - 0.3 |
| $TiO_2$ | 0 - 0.5 |
| $Br^-$ | 0 - 0.6 |
| where | |
| $\Sigma RO$ | 21 - 24 |
| $\frac{CaO + SrO}{BaO}$ | 1.45 - 1.75 |

and an alkaline metal oxide content of < 0.03% by weight
and a water content of < 0.02% by weight.

2. Glass according to Claim 1, **characterized by** the following composition (in % by weight, based on oxide):

| | |
|---|---|
| $SiO_2$ | 59 - 61 |
| $Al_2O_3$ | 15.3 - 17.2 |
| $B_2O_3$ | 0.3 - 0.5 |
| CaO | 5.9 - 13.5 |
| SrO | 0 - 8 |
| BaO | > 6.5 -9.5 |
| $ZrO_2$ | 0.05 - 1 |
| $CeO_2$ | 0 - 0.3 |
| $TiO_2$ | 0 - 0.5 |
| $Br^-$ | 0 - 0.6 |
| where | |
| $\Sigma RO$ | 21 - 24 |
| $\frac{CaO + SrO}{BaO}$ | 1.45 - 1.75 |

and an alkali metal oxide content of < 0.03% by weight and a water content of < 0.02% by weight

3. Glass according to Claim 1 or 2, **characterized in that** the glass additionally contains up to < 1% by weight of MgO, and **in that** the sum of RO is 21 - 24% by weight and the weight ratio of (MgO + CaO + SrO)/BaO is 1.45 - 1.75.

4. Glass according to Claim 1, 2 or 3, **characterized in that** the weight ratio of (MgO + CaO + SrO)/BaO is 1.65 - 1.75.

5. Glass according to at least one of Claims 1 to 4, **characterized in that** it contains at least 0.5% by weight of $Br$.

6. Glass according to at least one of Claims 1 to 5, **characterized in that** it contains at least 0.04% by weight of $CeO_2$.

7. Glass according to at least one of Claims 1 to 6, having a coefficient of thermal expansion $\alpha_{20/300}$ of between 4.3 $\cdot 10^{-6}$/K and 4.95 $\cdot 10^{-6}$/K, a transformation temperature $T_g$ of more than 775°C and a reboil temperature of at least 1450°C.

8. Use of a glass according to at least one of Claims 1 to 7 as bulb material for lamp bulbs with bulb temperatures of more than 650°C.

**Revendications**

1. Verre d'aluminosilicate alcalinoterreux pour des ampoules de lampe présentant des composants en molybdène et des températures d'ampoule de plus de 650°C, **caractérisé par** la composition suivante (en % en poids sur base d'oxydes) :

| | |
|---|---|
| $SiO_2$ | >58 - 62 |
| $Al_2O_3$ | 15 - 17,5 |
| $B_2O_3$ | 0,2 - 0,7 |
| CaO | 5,5 - 14 |
| SrO | 0 - 8 |
| BaO | 6 - 10 |
| $ZrO_2$ | 0,05 - 1 |
| $CeO_2$ | 0 - 0,3 |
| $TiO_2$ | 0 - 0, 5 |
| $Br^-$ | 0 - 0, 6 |
| avec | |
| $\Sigma RO$ | 21 - 24 |
| $\dfrac{CaO + SrO}{BaO}$ | 1,45 - 1,75 |

et avec une teneur en oxyde alcalin de <0,03% en poids
et avec une teneur en eau de <0,02% en poids.

2. Verre selon la revendication 1, **caractérisé par** la composition suivante (en % en poids sur base d'oxydes) :

| | |
|---|---|
| $SiO_2$ | 59 - 61 |
| $Al_2O_3$ | 15,3 - 17,2 |
| $B_2O_3$ | 0,3 - 0,5 |
| CaO | 5,9 - 13,5 |
| SrO | 0 - 8 |
| BaO | >6,5 - 9,5 |
| $ZrO_2$ | 0,05 - 1 |
| $CeO_2$ | 0 - 0,3 |
| $TiO_2$ | 0 - 0,5 |
| $Br^-$ | 0 - 0,6 |
| avec | |
| ERO | 21 - 24 |
| $\dfrac{CaO + SrO}{BaO}$ | 1,45 - 1,75 |

et avec une teneur en oxyde de alcalin de <0,03% en poids
et avec une teneur en eau de <0,02% en poids.

3. Verre selon la revendication 1 ou 2, **caractérisé en ce que** le verre contient en plus jusqu'à <1% en poids de MgO et que la somme de RO s'élève à 21-24% en poids et le rapport pondéral (MgO + CaO + SrO)/BaO est de 1,45-1,75.

4. Verre selon la revendication 1, 2 ou 3, **caractérisé en ce que** le rapport pondéral (MgO + CaO + SrO)/BaO est de 1,65-1,75.

5. Verre selon au moins l'une quelconque des revendications 1 à 4, **caractérisé en ce qu'**il contient au moins 0,5% en poids de $Br^-$.

**6.** Verre selon au moins l'une quelconque des revendications 1 à 5, **caractérisé en ce qu'**il contient au moins 0,04% en poids de $CeO_2$.

**7.** Verre selon au moins l'une quelconque des revendications 1 à 6, avec un coefficient de dilation thermique $\alpha_{20/300}$ entre $4,3 \cdot 10^{-6}$/K et $4,95 \cdot 10^{-6}$/K, une température de transformation $T_g$ de plus de 775°C et une température de réébullition d'au moins 1450°C.

**8.** Utilisation d'un verre selon au moins l'une quelconque des revendications 1 à 7 en tant que matériau d'ampoule pour ampoules de lampe présentant des températures d'ampoule de plus de 650°C.